# EUROPEAN PATENT SPECIFICATION

(11) **EP 4 261 725 B1**
(45) Date of publication and mention of the grant of the patent: **19.06.2024**
(21) Application number: 22167899.8
(22) Date of filing: 12.04.2022
(51) Int. Cl.: G06F 21/62, G06N 20/00

(54) **METHOD AND DEVICES FOR PROVIDING DATA IN ACCORDANCE WITH AN ACCESS RESTRICTION**
VERFAHREN UND VORRICHTUNGEN ZUR BEREITSTELLUNG VON DATEN IN ÜBEREINSTIMMUNG MIT EINER ZUGRIFFSBESCHRÄNKUNG
PROCÉDÉ ET DISPOSITIFS PERMETTANT DE FOURNIR DES DONNÉES CONFORMÉMENT À UNE RESTRICTION D'ACCÈS

(43) Date of publication of application: 18.10.2023
(73) Proprietor: Helsing GmbH, 81671 Munich (DE)
(72) Inventor: Adler, Antonia, Munich 81671 (DE); Dubinska, Maja, Munich 81671 (DE); Schneider, Manuel, Munich 81671 (DE); Gendre, Maxime, Munich 81671 (DE); Turner, Theo, Munich 81671 (DE)
(74) Representative: Rummler, Felix

(56) References cited:
- DAVID F FERRAIOLO ET AL: "Proposed NIST standard for role-based access control", ACM TRANSACTIONS ON INFORMATION AND SYSTEM SECURITY, ACM, NEW YORK, NY, US, vol. 4, no. 3, 1 August 2001 (2001-08-01), pages 224-274, XP058098436, ISSN: 1094-9224, DOI: 10.1145/501978.501980
- LEE KEON MYUNG ET AL: "Autonomic machine learning platform", INTERNATIONAL JOURNAL OF INFORMATION MANAGEMENT, ELSEVIER SCIENCE LTD, GB, vol. 49, 11 July 2019 (2019-07-11), pages 491-501, XP085857475, ISSN: 0268-4012, DOI: 10.1016/J.IJINFOMGT.2019.07.003 [retrieved on 2019-07-11]
- LUKAS TUGGENER ET AL: "Automated Machine Learning in Practice: State of the Art and Recent Results", ARXIV.ORG, CORNELL UNIVERSITY LIBRARY, 201 OLIN LIBRARY CORNELL UNIVERSITY ITHACA, NY 14853, 19 July 2019 (2019-07-19), XP081444512, DOI: 10.1109/SDS.2019.00-11
- OLIVER EBERLE ET AL: "Building and Interpreting Deep Similarity Models", ARXIV.ORG, CORNELL UNIVERSITY LIBRARY, 201 OLIN LIBRARY CORNELL UNIVERSITY ITHACA, NY 14853, 11 March 2020 (2020-03-11), XP081619585,

## Description

### BACKGROUND OF THE INVENTION

Machine learning models may be created, e.g. developed, trained and/or evaluated, on multiuser data processing platforms accessed by different users having different access authorisations. Hence, for example, a developer of a ML model may not have read access to a training dataset of the ML model or other data associated with the creation of the ML model. The developer may however still see the training dataset. Existing approaches do either not allow a user to create the ML model without providing the user with the required data or only provide cumbersome processes in this regard. The maintenance of data security, e.g. of access restrictions, during the ML model creation, however, may be of high importance when dealing with sensitive data, in particular in the military or defence domain.

DAVID F FERRAIOLO ET AL: "Proposed NIST standard for role-based access control", ACM TRANSACTIONS ON INFORMATION AND SYSTEM SECURITY, ACM, NEW YORK, NY, US, vol. 4, no. 3, 1 August 2001 (2001-08-01), pages 224-274, XP058098436, ISSN: 1094-9224, DOI: 10.1145/501978.501980 proposes a standard for role-based access control (RBAC).

LEE KEON MYUNG ET AL: "Autonomic machine learning platform", INTERNATIONAL JOURNAL OF INFORMATION MANAGEMENT, ELSEVIER SCIENCE LTD, GB, vol. 49, 11 July 2019 (2019-07-11), pages 491 -501, XP085857475, ISSN: 0268-4012, DOI: 10.1016/J.IJINFOMGT.2019.07.003 proposes an autonomic machine learning platform which provides the decision factors to be made during the developing of machine learning applications. In the proposed autonomic machine learning platform, machine learning processes are automated based on the specification of autonomic levels. This autonomic machine learning platform can be used to derive a high-quality learning result by minimizing experts'interventions and reducing the number of design selections that require expert knowledge and intuition. It also demonstrates that the proposed autonomic machine learning platform is suitable for smart cities which typically require considerable amounts of security sensitive information.

LUKAS TUGGENER ET AL: "Automated Machine Learning in Practice: State of the Art and Recent Results", ARXIV.ORG, CORNELL UNIVERSITY LIBRARY, 201 OLIN LIBRARY CORNELL UNIVERSITY ITHACA, NY 14853, 19 July 2019 (2019-07-19), XP081444512, DOI: 10.1109/SDS.2019.00-11 gives an overview of the state of the art in AutoML with a focus on practical applicability in a business context, and provides recent benchmark results on the most important AutoML algorithms.

OLIVER EBERLE ET AL: "Building and Interpreting Deep Similarity Models", ARXIV.ORG, CORNELL UNIVERSITY LIBRARY, 201 OLIN LIBRARY CORNELL UNIVERSITY ITHACA, NY 14853, 11 March 2020 (2020-03-11), XP081619585, proposes to make similarities interpretable by augmenting them with an explanation in terms of input features. Many learning algorithms such as kernel machines, nearest neighbors, clustering, or anomaly detection, are based on the concept of 'distance' or 'similarity'. Before similarities are used for training an actual machine learning model, we would like to verify that they are bound to meaningful patterns in the data.

The object of the invention is to provide a method that allows for secure data access to training data of ML models or data associated with ML models.

### SUMMARY

The present invention, which is defined by the appended claims, provides a computer implemented solution for effectively and securely providing data in accordance with an access restriction. In particular, machine learning, ML, model creation is enabled whilst maintaining data security, for example by meeting access restrictions to development and/or training data for the ML model.

According to one of many embodiments, there is provided a computer implemented method for providing data in accordance with an access restriction, the method comprising: determining first data characteristics associated with first data, the first data being subject to the access restriction; determining second data characteristics associated with second data; determining whether a similarity of the first and second data characteristics meets a predetermined threshold; and providing, in particular outputting or indicating, the second data if the similarity meets the predetermined threshold.

The first data or dataset may be used for training, evaluating and/or deploying a ML model. The first data may comprise sensitive data, in particular military data. The second data may be provided to a user, e.g. a developer, of the corresponding ML model without having (read) access to the first data. The second data may not be subject to the access restriction. The access restriction may be associated with or applied the user. By providing the user or developer with the second data meeting the similarity threshold, the developer is enabled to appropriately create the ML model whilst maintaining data security.

The data characteristics may be indicative of, include or specify an abstract shape of the data. In other words: The data characteristics may be indicative of at least one of a structure, shape, type, type of content, syntax and semantics of the associated data, in particular on a general level such that the actual content of the associated data is not revealed. Alternatively, or additionally, the data characteristics may be indicative of the source of the associated data, or put differently, how the associated data was acquired.

The first and second data characteristics may be similar if the abstract shape of the associated data corresponds to each other at least in part. In other words: A data characteristics similarity may comprise at least two data characteristics being compatible and/or at least in part equal to each other. Put in yet another way: Determining whether the similarity of the first and second data characteristics meets the similarity threshold comprises determining whether the first data characteristics correspond at least in part to the second data characteristics.

The similarity threshold may be predetermined, in particular such that the second data fulfils certain requirements for a specific task, e.g. the model development. In that manner, a developer may develop the ML model based on the second data. As the second data meets the similarity threshold, the so developed ML model may be used, e.g. trained, evaluated and/or deployed, with the first data.

According to an embodiment, the first and/or second data characteristics are determined based on first and second previously stored metadata associated with the first and second data, respectively.

In other words: The data characteristics are comprised, indicated or specified by the first and second stored metadata. The data characteristics and/or stored metadata may comprise data labels included in or associated with the respective associated data. In an example, the stored metadata may be included in the respective associated data or may be accessible separately. In that manner, the data characteristics, in particular the similarity of the data characteristics, may be determined without accessing, in particular reading, the first and second data, thereby enhancing data security.

According to an embodiment, the method further comprises: prior to the determination of the second data, adding the second data to a plurality of stored data; in response to the addition of the second data, automatically determining and/or storing second metadata indicative of the second data characteristics; and determining the second data characteristics based on the second metadata.

Additionally or alternatively, a new third, fourth, etc. data or dataset may be added to the plurality of stored data in a similar manner. Thereby, a database of metadata or data characteristics is created and maintained that corresponds to or is associated with the plurality of stored data and based on which the similarity between a reference dataset and at least one of the plurality of datasets can be determined on demand in a fast and effective way whilst maintaining data security.

According to an embodiment, the automatic determination of the second metadata is performed by a machine learning model. Thereby, the efficiency and data security of the method is further enhanced.

The method further comprises: receiving a request of a user to access the first data, wherein the access restriction applies to the user; automatically providing, in particular identifying and providing, the second data to the user in response to the receipt of the user request.

The user may thus specifically indicate which data or type of data is required or to which data the provided dataset needs to be similar, thereby improving the accuracy of the method. The method then identifies the second data, determines whether the similarity threshold is met. In other words, the method identifies datasets similar to the requested dataset. If so, the second data, i.e. the similar data, is provided to the user.

According to an embodiment, the first and second data characteristics comprise syntax characteristics and/or semantic characteristics of the first and second datasets, respectively.

The data characteristics may thus indicate the (type of) content and/or structure of the respective dataset, for example the storage format and data schema of the dataset. Additionally, or alternatively, the data characteristics may indicate the data type and/or the data source or origin of the respective dataset. For example, the data characteristics may indicate which object types are represented by the respective dataset, by whom the data was collected and/or how the data is organised or stored.

According to an embodiment, the method further comprises: performing a first process on third data using the second data; and subsequent to performing the first process, performing a second process on the third data using the first data.

The third data may be, comprise, or represent a ML model. The first and second processes may comprise a development, training, evaluation and/or deployment of the third data. In one example, the first process comprises the development or training of the third data and the second process comprises the training, evaluation or deployment of the third data. That is, the second and/or first data may be a parent of the third data, depend on, or otherwise form basis for the third data. In particular, the second process may be performed without enabling access (for a user, e.g. a developer) to the first data. In that manner, third data may be developed or created that is configured to be used with the first data without having revealed the first data.

According to an embodiment, the method further comprises: subsequent to performing the second process, restricting access to the third data and/or enabling access to, in particular providing, metadata of the third data.

As the processed third data may reveal at least a part of the first data, in particular a sensible part of the first data, restricting access to the processed third data further enhances data security and, more particular, ensures access restriction propagation.

According to another embodiment, there is provided a data processing apparatus comprising means for carrying out the above described method.

According to another embodiment, there is provided a data computer program comprising instructions which, when the program is executed by a computer, cause the computer to carry out the above described method.

According to another embodiment, there is provided a data computer-readable medium comprising instructions which, when executed by a computer, cause the computer to carry out the above described method.

### BRIEF DESCRIPTION OF THE DRAWINGS

The present invention may be better understood from reading the following description of non-limiting embodiments, with reference to the attached drawings, wherein:
Fig. 1 shows a flowchart of a computer implemented method for providing data in accordance with an access restriction;
fig. 2 shows a flow chart of a computer implemented method for determining data characteristics that may be performed prior to the method for providing data in accordance with an access restriction;
fig. 3 shows a flow chart of a computer implemented method for performing a process on and/or restricting access to a ML model that may be performed subsequent to the method for providing data in accordance with an access restriction; and
fig. 4 shows a data-processing apparatus configured to carry out any of the method steps described with reference to figures 1 to 3.

### DETAILLED DESCRIPTION OF THE PREFERRED EMBODIMENTS

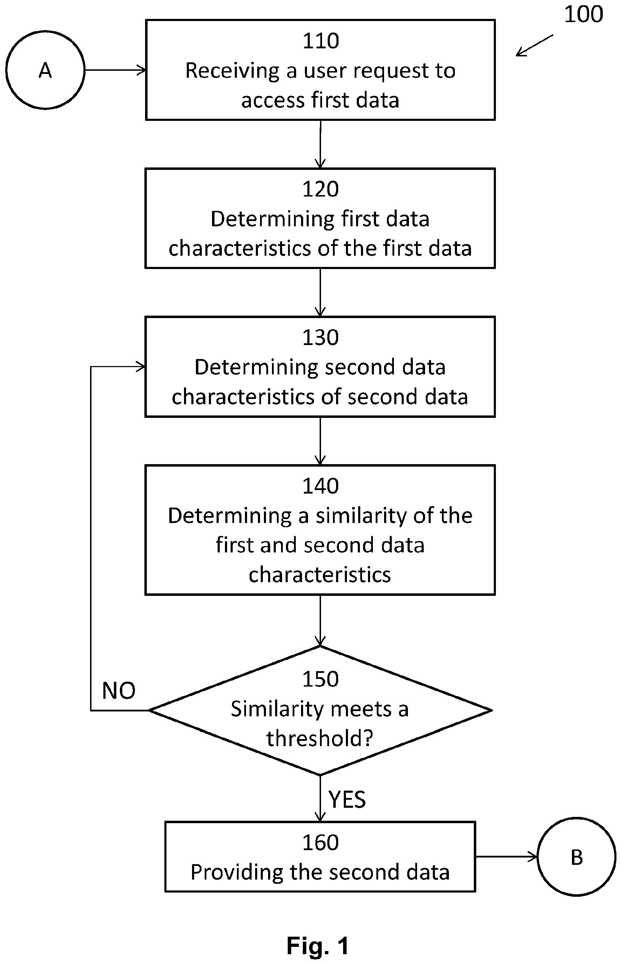

**Figure** 1 shows a flowchart of a computer implemented method 100 for providing data in accordance with an access restriction according to one or more preferred embodiments.

In step 110, a user request to access first data is received. The user request may be received on a multiuser data processing platform. The first data is subject to an access restriction. For example, the user requesting the first data may be restricted from accessing the first data on the platform. More particular, the user may not have read and/or write access to the first data on the platform.

The user may be a developer of a machine learning, ML, model. The ML model may be developed to be trained with, deployed on, or otherwise used with, the first data. Step 110 may alternatively, or additionally, include the step of receiving a user request to data that is similar to the first data, for example when the user is aware of his or her access restriction. Put in yet another way, in step 110, a request for second data may be received that can be used for developing a ML model, wherein the request indicates that the ML model is to be used with the first data.

In step 120, first data characteristics of the first data are determined. The first data characteristics are associated with the first data. The first data characteristics may comprise specific information regarding at least one of the nature, type, syntax, semantics, origin shape, or structure of the first data. In other words, the first data characteristics may indicate the structure and/or type of content of the first data, in particular without revealing the specific content of the first data.

The first data characteristics may be included in the first data. In another example, the first data characteristics may be stored separately from the first data. Additionally, or alternatively, the first data characteristics may be included in first metadata associated with the first data. The first data characteristics may comprise data labels. The data labels may label the first data, in particular each or a part of a plurality of data or datasets included in the first data.

In step 130, second data is identified. The second data is not subject to the access restriction. In other words, the second data is, as opposed to the first data, not classified. Put in yet another way, the user from which the user request is received in step 110 has access, in particular read and/or write access, to the second data. The second data may be identified based on a plurality of data or datasets. The plurality of data may be included in or may be represented by a data application programming interface, data API. The data API may further comprise the first data.

Further, in step 130, second data characteristics of the second data are determined. The second data characteristics are associated with the second data in the same or similar way as the first data characteristics are associated with the first data. The above description of the first data characteristics accordingly applies to the second characteristics. The first and/or the second data characteristics may be included in the data API.

In step 140, a similarity of the first and second data characteristics is determined. Step 140 may comprise performing a comparison of the first and second data characteristics. The first and second data characteristics may be considered similar if at least a part of the first and second data characteristics correspond to each other, overlap, or are otherwise similar to each other. A type of similarity may be predefined. In other words, it may be predefined under which conditions different data characteristics are to be considered similar. Put in yet another way, the similarity may be determined in step 140 using a deterministic algorithm. Additionally, or alternatively, the determination in step 140 may be performed by a trained ML model.

In step 150, it is determined whether the similarity determined in step 140 meets a threshold, also referred to herein as a similarity threshold. The similarity may meet the threshold if the first and second data characteristics are at least in part similar to each other, e.g. if at least a predetermined part of the first and second data characteristics correspond to each other, or are otherwise similar to each other. Put differently, the similarity may meet the threshold if the structure, shape and/or type of content of the first and second data (as indicated by the first and second data characteristics) correspond to each other, in particular fully correspond to each other or correspond to each other to a predetermined extend.

If, in step 150, it is determined that the similarity does not meet the threshold, the method returns to step 130, in which another second data is determined and another second data characteristics of the other second data is determined.

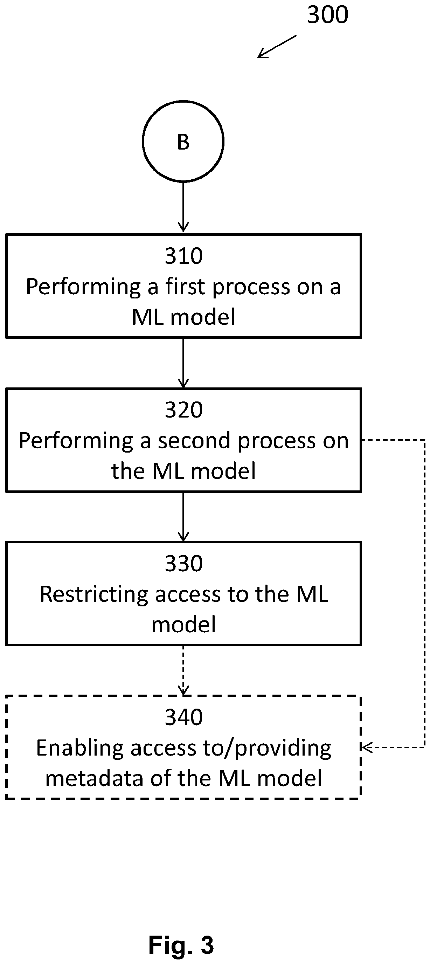

If, in step 150, it is determined that the similarity meets the threshold, the second data is provided in step 160. For example, the second data is provided to a or the user, or otherwise output or indicated to the user, in particular to the user from which the user request is received in step 110. In that manner, second data is provided that is similar to the requested first data, such that the task to be performed using the first data, for example a process to be performed using the first data, the task or process preferably being specified in the request, can be performed using the second data. The task to be performed may comprise a development process of a ML model, as explained in more detail below with reference to figure 3.

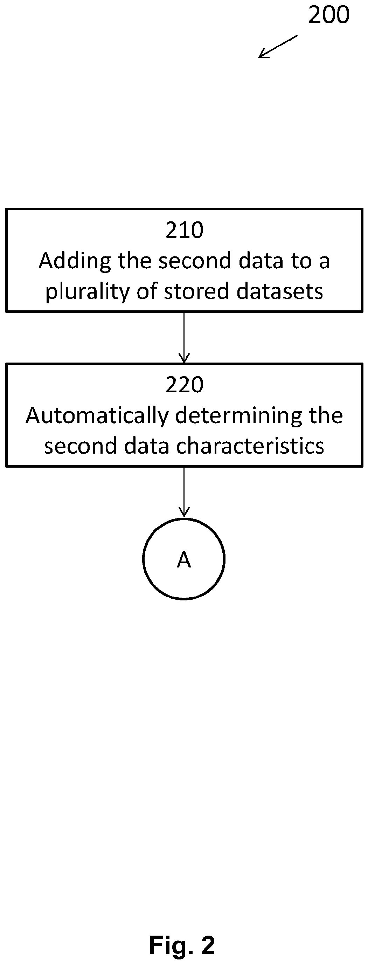

**Figure** 2 shows a flowchart of a method 200 for automatically determining the second data characteristics. The method 200 may be performed prior to the method 100. However, in general, the method steps of any of the methods described with reference to figures 1 to 3 may be performed in a different order.

In step 210, the second data is added to a plurality of stored data, or datasets. As described above, the plurality of stored data may be referred to as the data API.

In response to the addition of the second data to the plurality of stored data, the second data characteristics are automatically determined in step 220. In other words, whenever new data or a new dataset is added to the plurality of stored data, data characteristics of said new data is automatically determined. Said data characteristics associated with the new data may be added to the data API, stored separately and/or stored within the new data.

(Automatically) determining the second data characteristics, as performed in step 220, may comprise determining one or more data tags associated with the second data. In other words, determining the second data characteristics may comprise analysing and/or labelling the second data. The data tags or labels may be stored as the second metadata associated with the second data. As mentioned above, the second metadata may be included in the second data or may be stored separately, in particular as part of the data API. The automatic determination of the second data characteristics in step 220 may be performed by a ML model. In that manner, a database or a data API is built that comprises a plurality of data and corresponding data characteristics associated therewith. Based on said database, a suitable second data, the data characteristics of which are similar to the first data characteristics such that the similarity threshold is met, may be identified in an automated and efficient way.

**Figure 3** shows a flowchart of a method 300 for performing processes on a ML model and defining access restrictions to the ML model. The method 300 may be performed subsequent to the method 100 and/or the method 200 described with reference to figures 1 and 2.

In step 310, a first process is performed on a ML model using the second data that is provided in step 160 of method 100. The first process may comprise a development process of the ML model. In other words, the second data is used for ML model development or creation, wherein the developed ML model is to be subsequently used with the first data, as indicated in the user request received in step 110 of the method 100.

In step 320, a second processes is performed on the ML model using the first data. The second process may comprise a training process of the ML model. In other words, the ML model may be trained with the first data after the ML model has been developed or trained based on the second data similar to the first data. In one embodiment, the second process may be based on, or use, the first and the second data. The first and/or second process may be performed (in steps 310 and 320) in response to a user input, in particular in response to an input received from the user from which the user request was received in step 110 of the method 100. That is to say that the user may trigger the performance of both the first and second process. As the user from which the user request is received in step 110 may be restricted from accessing the first data, the training process performed in step 320 may be referred to as a blind training process.

In step 330, access to the trained ML model is restricted. In other words, an access restriction or access authorisation is determined, that is in line with the access restriction to the first data. Put differently, the same access restrictions that apply to the training data, i.e. the first data, are applied to the trained ML model. Put in yet another way, as the trained ML model depends on the first data, the access restrictions to the first data apply to the trained ML model. In that manner, a consistent data restriction policy can be maintained based on data provenance or lineage.

In step 340, that may be performed in addition or instead of step 330, access to metadata of the trained ML model may be enabled, e.g. the metadata may be provided, in particular output or indicated. In particular, the metadata may be provided to the user from which the user request is received in step 110 of the method 100. The metadata of the trained ML model may comprise training statistics of the trained ML model or other information associated with the ML model and used or usable for developing the ML model. The metadata of the ML model may not reveal the specific content of the first data. Hence, by performing the training process on the ML model in step 320 and providing, e.g. outputting, only metadata of the ML model, a blind training processes is performed on the ML model without enabling access to, or other wise providing, the first data, thereby maintaining the access restriction, i.e. predetermined security requirements.

Step 330 and/or step 340 may comprise enabling or providing a discovery access to the ML model, in particular for the user from which the user request in step 110 of the method 100 is received. In other words, the user may see or discover the trained ML model and/or the first data, without having read or write access to the ML model and/or the first data. Put in yet another way, the user, e.g. the ML model developer, may be aware of the trained ML model and/or the first data without being able to access sensible data included in the first data and/or the ML model.

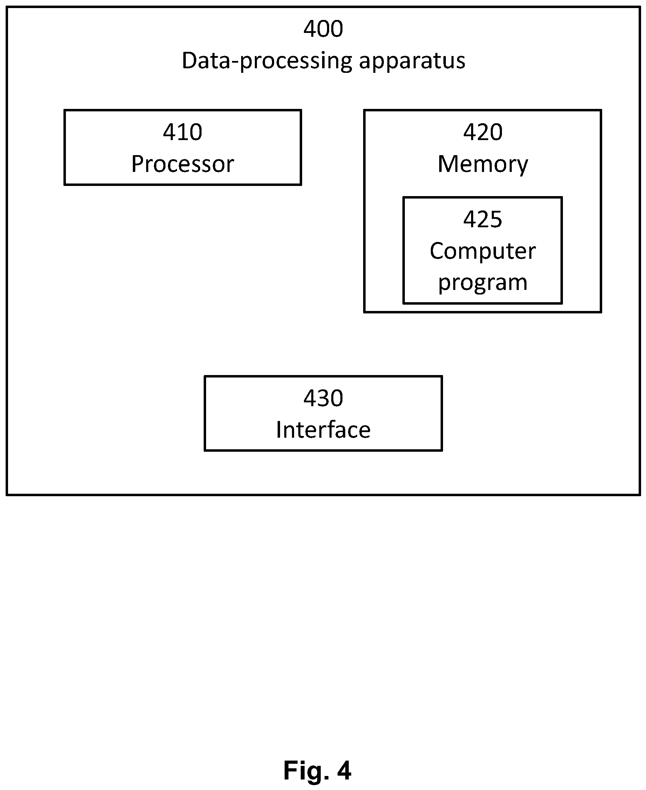

**Figure 4** shows a data-processing apparatus 400 configured to carry out any of the method steps described with reference to figures 1 to 3. To this end, the data-processing apparatus 400 may comprise a processor 410 and a memory or computer readable medium 420.

The memory 420 may comprise the above described plurality of stored data or datasets and/or the above described metadata associated with the stored plurality of data. In other words, the above described data API is comprised by the memory 420. Alternatively, or additionally, at least one of the above described ML models is included in, i.e. stored on, the memory 420.

A computer program 425 is stored on the memory 420. The computer program 425 may comprise instructions which, when the program is executed by a computer, in particular by the data-processing apparatus 400, cause the computer or data-processing apparatus 400 to carry out any of the method steps described with reference to figures 1 to 3.

The data-processing apparatus 400 may further comprise an interface 430. The interface 430 may connect other components of the data-processing apparatus 400, e.g. the processor 410 and the memory 420, and/or provide connection to other components being communicatively coupled to the data-processing apparatus 400. The interface 430 may further be a (user) interface for providing or otherwise enabling access to the data determined in any of the method steps described with reference to figures 1 to 3, in particular in step 160 of the method 100, and, more particularly, to the user from the user request was received in step 110 of the method 100.

## Claims

1. A computer implemented method for providing data in accordance with an access restriction, the method comprising:
receiving (110) a request of a user to access first data, the first data being subject to the access restriction, wherein the access restriction applies to the user;
determining (120) first data characteristics associated with the first data;
determining (130) second data characteristics associated with second data not being subject to the access restriction; determining (150) whether a similarity of the first and second data characteristics meets a predetermined threshold; and
automatically providing (160), in particular outputting or indicating, the second data to the user in response to the receipt of the user request if the similarity meets the predetermined threshold.

2. The method according to claim 1, wherein the first and/or second data characteristics are determined based on first and second previously stored metadata associated with the first and second data, respectively.

3. The method according to any of the preceding claims, further comprising:
prior to the determination of the second data, adding (210) the second data to a plurality of stored data;
in response to the addition of the second data, automatically determining and/or storing (220) second metadata indicative of the second data characteristics; and
determining (130) the second data characteristics based on the second metadata.

4. The method according to claim 3, wherein the automatic determination of the second metadata is performed by a machine learning model.

5. The method according to any of the preceding claims, wherein the first and second data characteristics comprises syntax characteristics and/or semantic characteristics of the first and second datasets, respectively.

6. The method according to any of the preceding claims, further comprising:
performing (310) a first process on a third data using the second data; and
subsequent to performing the first process, performing (320) a second process on the third data using the first data.

7. The method according to claim 6, further comprising:
subsequent to performing the second process, restricting (330) access to the third data and/or enabling (340) access to, in particular providing, metadata of the third data.

8. The method of any of the proceeding claims, further comprising:
developing, creating or training (310) a machine learning, ML, model using the second data;
in response to an input of the user, training (320) the ML model using the first data after the ML model has been developed, created or trained using the second data.

9. The method of claim 8, further comprising:
subsequent to training the ML model using the first data, applying (330) the access restriction to the ML model.

10. A data processing apparatus (400) comprising means for carrying out the method of any of the preceding claims.

11. A computer program (425) comprising instructions which, when the program is executed by a computer, cause the computer to carry out the method of any of claims 1-9.

12. A computer-readable medium (420) comprising instructions which, when executed by a computer, cause the computer to carry out the method of any of claims 1-9.

## Patentansprüche

1. Computerimplementiertes Verfahren zum Bereitstellen von Daten gemäß einer Zugriffsbeschränkung, wobei das Verfahren Folgendes beinhaltet:
Empfangen (110) einer Anforderung eines Benutzers zum Zugreifen auf erste Daten, wobei die ersten Daten der Zugriffsbeschränkung unterliegen, wobei die Zugriffsbeschränkung für den Benutzer gilt;
Bestimmen (120) von mit den ersten Daten assoziierten ersten Datencharakteristiken;
Bestimmen (130) von zweiten Datencharakteristiken, die mit zweiten Daten assoziiert sind, die der Zugriffsbeschränkung nicht unterliegen;
Feststellen (150), ob eine Ähnlichkeit der ersten und zweiten Datencharakteristiken einen vorbestimmten Schwellenwert erfüllt; und
automatisches Bereitstellen (160), insbesondere Ausgeben oder Anzeigen, der zweiten Daten dem Benutzer als Reaktion auf den Empfang der Benutzeranforderung, wenn die Ähnlichkeit den vorbestimmten Schwellenwert erfüllt.

2. Verfahren nach Anspruch 1, wobei die ersten und/oder zweiten Datencharakteristiken auf der Basis von mit den ersten bzw. zweiten Daten assoziierten ersten und zweiten zuvor gespeicherten Metadaten bestimmt werden.

3. Verfahren nach einem der vorherigen Ansprüche, das ferner Folgendes umfasst:
Hinzufügen (210), vor dem Bestimmen der zweiten Daten, der zweiten Daten zu einer Mehrzahl von gespeicherten Daten;
automatisches Bestimmen und/oder Speichern (220) von zweiten Metadaten, die die zweiten Datencharakteristiken anzeigen, als Reaktion auf das Hinzufügen der zweiten Daten; und
Bestimmen (130) der zweiten Datencharakteristiken auf der Basis der zweiten Metadaten.

4. Verfahren nach Anspruch 3, wobei das automatische Bestimmen der zweiten Metadaten von einem Machine-Learning-Modell durchgeführt wird.

5. Verfahren nach einem der vorherigen Ansprüche, wobei die ersten und zweiten Datencharakteristiken Syntaxcharakteristiken und/oder semantische Charakteristiken des ersten bzw. zweiten Datensatzes umfassen.

6. Verfahren nach einem der vorherigen Ansprüche, das ferner Folgendes beinhaltet:
Durchführen (310) eines ersten Prozesses an dritten Daten mittels der zweiten Daten; und
Durchführen (320), im Anschluss an die Durchführung des ersten Prozesses, eines zweiten Prozesses an den dritten Daten mittels der ersten Daten.

7. Verfahren nach Anspruch 6, das ferner Folgendes beinhaltet:
Beschränken (330), im Anschluss an die Durchführung des zweiten Prozesses, des Zugriffs auf die dritten Daten und/oder Freigeben (340) des Zugriffs auf, insbesondere Bereitstellen von, Metadaten der dritten Daten.

8. Verfahren nach einem der vorherigen Ansprüche, das ferner Folgendes beinhaltet:
Entwickeln, Erzeugen oder Trainieren (310) eines ML-(Machine Learning)-Modells mittels der zweiten Daten;
Trainieren (320), als Reaktion auf eine Eingabe des Benutzers, des ML-Modells mittels der ersten Daten nach dem Entwickeln, Erzeugen oder Trainieren des ML-Modells mittels der zweiten Daten.

9. Verfahren nach Anspruch 8, das ferner Folgendes beinhaltet:
Anwenden (330) der Zugriffsbeschränkung auf das MI,-Modell im Anschluss an das Trainieren des ML-Modells mittels der ersten Daten.

10. Datenverarbeitungsgerät (400), das Mittel zur Durchführung des Verfahrens nach einem der vorherigen Ansprüche umfasst.

11. Computerprogramm (425), das Befehle umfasst, die bei Ausführung des Programms durch einen Computer den Computer zum Durchführen des Verfahrens nach einem der Ansprüche 1-9 veranlassen.

12. Computerlesbares Medium (420), das Befehle umfasst, die bei Ausführung durch einen Computer den Computer zum Durchführen des Verfahrens nach einem der Ansprüche 1-9 veranlassen.

## Revendications

1. Un procédé mis en oeuvre par ordinateur de fourniture de données conformément à une restriction d'accès, le procédé comprenant :
la réception (110) d'une demande d'un utilisateur d'accès à des premières données, les premières données étant soumises à la restriction d'accès, où la restriction d'accès s'applique à l'utilisateur,
la détermination (120) de premières caractéristiques de données associées aux premières données,
la détermination (130) de deuxièmes caractéristiques de données associées à des deuxièmes données qui ne sont pas soumises à la restriction d'accès,
la détermination (150) si une similarité des premières et deuxièmes caractéristiques de données satisfait un seuil prédéterminé, et
la fourniture automatique (160), plus particulièrement la production en sortie ou l'indication, des deuxièmes données à l'utilisateur en réponse à la réception de la demande d'utilisateur si le similarité satisfait le seuil prédéterminé.

2. Le procédé selon la Revendication 1, où les premières et/ou deuxièmes caractéristiques de données sont déterminées en fonction de premières et deuxièmes métadonnées antérieurement conservées en mémoire associées aux premières et deuxièmes données, respectivement.

3. Le procédé selon l'une quelconque des Revendications précédentes, comprenant en outre :
avant la détermination des deuxièmes données, l'ajout (210) des deuxièmes données à une pluralité de données conservées en mémoire,
en réponse à l'ajout des deuxièmes données, la détermination automatique et/ou la conservation en mémoire (220) de deuxièmes métadonnées indicatives des deuxièmes caractéristiques de données, et
la détermination (130) des deuxièmes caractéristiques de données en fonction des deuxièmes métadonnées.

4. Le procédé selon la Revendication 3, où la détermination automatique des deuxièmes métadonnées est exécutée par un modèle d'apprentissage automatique.

5. Le procédé selon l'une quelconque des Revendications précédentes, où les premières et deuxièmes caractéristiques de données comprennent des caractéristiques syntaxiques et/ou des caractéristiques sémantiques des premiers et deuxièmes ensembles de données, respectivement.

6. Le procédé selon l'une quelconque des Revendications précédentes, comprenant en outre :
l'exécution (310) d'un premier processus sur des troisièmes données au moyen des deuxièmes données, et
suite à l'exécution du premier processus, l'exécution (320) d'un deuxième processus sur les troisièmes données au moyen des premières données.

7. Le procédé selon la Revendication 6, comprenant en outre :
suite à l'exécution du deuxième processus, la restriction (330) d'accès aux troisièmes données et/ou l'autorisation (340) d'accès à, plus particulièrement la fourniture de, métadonnées des troisièmes données.

8. Le procédé selon l'une quelconque des Revendications précédentes, comprenant en outre :
le développement, la création ou la formation (310) d'un modèle d'apprentissage automatique, ML, au moyen des deuxièmes données,
en réponse à une entrée de l'utilisateur, la formation (320) du modèle ML au moyen des premières données après le développement, la création ou la formation du modèle ML au moyen des deuxièmes données.

9. Le procédé selon la Revendication 8, comprenant en outre :
suite à la formation du modèle ML au moyen des premières données, l'application (330) de la restriction d'accès au modèle ML.

10. Un appareil de traitement de données (400) comprenant un moyen d'exécution du procédé selon l'une quelconque des Revendications précédentes.

11. Un programme informatique (425) comprenant des instructions qui, lorsque le programme est exécuté par un ordinateur, amènent l'ordinateur à exécuter le procédé selon l'une quelconque des Revendications 1 à 9.

12. Un support lisible par ordinateur (420) comprenant des instructions qui, lorsqu'elles sont exécutées par un ordinateur, amènent l'ordinateur à exécuter le procédé selon l'une quelconque des Revendications 1 à 9.
